# FASCICULE DE BREVET EUROPEEN

(11) **EP 4 020 641 B1**
(45) Date de publication et mention de la délivrance du brevet: **14.06.2023**
(21) Numéro de dépôt: 21215641.8
(22) Date de dépôt: 17.12.2021
(51) Int. Cl.: H01M 8/04089, H01M 8/2432, H01M 8/2483, H01M 8/10, H01M 8/1018

(54) **PILE À COMBUSTIBLE A INJECTIONS MULTIPLES DE FABRICATION SIMPLIFIÉE**
BRENNSTOFFZELLE MIT MEHRFACHEINSPRITZUNG UND VEREINFACHTER HERSTELLUNG
MULTIPLE INJECTION FUEL CELL WITH SIMPLIFIED PRODUCTION

(30) Priorité: 22.12.2020 FR 2013926
(43) Date de publication de la demande: 29.06.2022
(73) Titulaire: Commissariat à l'énergie atomique et aux énergies alternatives, 75015 Paris (FR)
(72) Inventeur: POIROT-CROUVEZIER, Jean-Philippe, 38054 GRENOBLE CEDEX 09 (FR)
(74) Mandataire: Brevalex

(56) Documents cités:
- WO-A2-2006/118754
- DE-A1-102006 035 636
- US-A1- 2009 274 940
- US-A1- 2011 229 784

## Description

### DOMAINE TECHNIQUE ET ÉTAT DE LA TECHNIQUE ANTÉRIEURE

La présente invention se rapporte à une pile à combustible à injections multiples, et plus particulièrement aux piles à combustible fonctionnant à basse température.

Une pile à combustible est un empilement de cellules élémentaires, désigne AME, comprenant chacune une anode, une cathode et un électrolyte interposé entre l'anode et la cathode. Dans les cellules élémentaires a lieu une réaction électrochimique entre deux réactifs qui sont introduits de manière continue. Les cellules élémentaires sont disposées entre deux plaques bipolaires ou collecteurs de courant. Les plaques bipolaires séparent deux cellules élémentaires adjacentes et assurent leur connexion électrique. Des joints sont prévus entre les cellules élémentaires et les plaques bipolaires en périphérie de celles-ci.

Le combustible est apporté au contact de l'anode, le comburant au contact de la cathode. La réaction est subdivisée en deux demi-réactions :
- une oxydation à l'interface anode / électrolyte,
- une réduction à l'interface cathode / électrolyte.

Les réactifs (combustible et comburant) sont apportés à l'anode et à la cathode, et les produits et les espèces non réactives sont être évacués, ainsi que la chaleur produite. Dans les systèmes utilisant de l'hydrogène H₂ et de l'air atmosphérique comme réactifs, l'air est amené à la pile à travers une série de composants, tels qu'un filtre, un échangeur thermique, un humidificateur, etc. avant de pénétrer dans la pile à la cathode. L'hydrogène est apporté à l'anode, celui-ci peut être issu d'un grand nombre de sources différentes. En sortie de pile, plusieurs configurations existent qui dépendent du gaz injecté en entrée de la pile. Soit le gaz injecté dans le système est suffisamment pur et il peut être en partie réinjecté en entrée de la pile de manière à homogénéiser le mélange dans la pile, soit il est simplement purgé à intervalle régulier afin d'évacuer les polluants tout en minimisant la quantité d'hydrogène purgé.

Le document FR 2 975 227 propose un autre type de circulation, dans lequel les cellules de la pile à combustible sont divisées en deux groupes, les deux groupes étant alimentés en hydrogène en alternance au moins pendant une partie du fonctionnement, et les cellules qui ne sont pas alimentées directement, le sont au travers des cellules alimentées et des canaux d'évacuation. Après une certaine durée de fonctionnement, les deux groupes sont alimentés simultanément et le mélange gazeux, qui contient notamment de l'azote, est évacué.

Afin d'alimenter deux groupes de cellules distincts, on peut réaliser physiquement deux empilements de cellules montés d'une part et d'autre d'une plaque de maintien centrale qui comporte des moyens d'alimentation en hydrogène, cependant cette structure est encombrante.

D'autres possibilités existent, mais elles impliquent d'utiliser des joints d'épaisseurs différentes, ce qui augmente le nombre de composants de la pile et complexifie sa fabrication.

### EXPOSÉ DE L'INVENTION

C'est par conséquent un but de la présente invention d'offrir une pile à combustible permettant une alimentation alternée ou simultanée de deux groupes de cellules de réalisation simplifiée.

Le but énoncé ci-dessus est atteint par une pile à combustible comportant un empilement de cellules élémentaires séparées par des plaques bipolaires, des moyens d'alimentation en au moins un premier réactif comportant un premier collecteur d'alimentation en un premier réactif et un deuxième collecteur d'alimentation en un deuxième réactif, et des moyens d'évacuation des sous-produits de réaction. Au moins ledit premier collecteur d'alimentation comportant deux extrémités configurées pour être connectées à une source du premier réactif et ledit premier collecteur étant divisé en deux portions. Chaque portion du premier collecteur est fabriquée par découpe des cellules élémentaires et de toutes les plaques bipolaires sauf au moins une, la au moins une plaque bipolaire au moins en partie non découpée assurant une séparation étanche des deux portions de premier collecteur.

Dans un exemple avantageux, la plaque bipolaire comporte deux plaques accolées, une des deux plaques n'étant pas découpée.

En alimentant alternativement l'une et l'autre des extrémités du premier collecteur et donc l'une et l'autre des portions du premier collecteur, les cellules connectées fluidiquement audites portions sont alimentées alternativement. En alimentant simultanément l'une et l'autre des extrémités du collecteur et donc l'une et l'autre des portions du collecteur, les cellules connectées fluidiquement audites portions sont alimentées simultanément.

En d'autres termes, on utilise dans l'empilement au moins une plaque bipolaire ayant subi au moins une étape de fabrication en moins, qui va assurer la division au moins du premier collecteur d'alimentation et permettre l'alimentation alternée des deux groupes de cellules.

L'invention permet de ne pas modifier les joints de l'empilement puisque les éléments de l'empilement sont au même nombre et de même épaisseur.

L'un des objets de la présente demande est une pile à combustible comportant un empilement de cellules élémentaires séparées par des plaques bipolaires, chaque cellule élémentaire comportant une anode, une cathode et un électrolyte entre l'anode et la cathode, et définissant avec une plaque bipolaire du côté de l'anode un compartiment anodique, et du côté de la cathode un compartiment cathodique, un premier collecteur d'alimentation des compartiments anodiques en un premier réactif, un deuxième collecteur d'alimentation des compartiments cathodiques en un deuxième réactif, et au moins un collecteur d'évacuation des sous-produits de réaction. Le premier collecteur d'alimentation comporte deux extrémités configurées pour être connectées à une source du premier réactif et/ou le deuxième collecteur d'alimentation comporte deux extrémités configurées pour être connectées à une source du deuxième réactif. Ladite pile comporte des moyens de commande configurés pour commander séparément l'alimentation des première et deuxième extrémités du premier et/ou du deuxième collecteur d'alimentation. Ledit premier collecteur d'alimentation est divisé en deux portions par au moins une première paroi étanche au premier réactif, chaque portion étant reliée fluidiquement à des compartiments anodiques par des connexions fluidiques. Chaque portion est délimitée par des premières fenêtres formées dans des plaques bipolaires et des fenêtres dans les cellules élémentaires. La première paroi est formée par au moins une plaque bipolaire ne comportant pas ladite première fenêtre. Et/ou ledit deuxième collecteur d'alimentation est divisé en deux portions par au moins une deuxième paroi étanche au deuxième réactif, chaque portion étant reliée fluidiquement à des compartiments cathodiques par des connexions fluidiques. Chaque portion est délimitée par des deuxièmes fenêtres formées dans des plaques bipolaires et des fenêtres formées dans les cellules élémentaires, et la deuxième paroi est formée par au moins une plaque bipolaire ne comportant pas ladite deuxième fenêtre.

Avantageusement, les plaques bipolaires comportent deux demi-plaques superposées et les connexions entre les collecteurs et les compartiments anodiques et cathodiques sont réalisées au moins en partie entre lesdites plaques.

Dans un exemple de réalisation, la première paroi de séparation est formée par au moins une des demi-plaques d'une plaque bipolaire ne comportant pas ladite première fenêtre, et/ou la deuxième paroi de séparation est formée par au moins une des demi-plaques d'une plaque bipolaire ne comportant pas ladite deuxième fenêtre.

Deux plaques bipolaires adjacentes dans l'empilement peuvent comporter chacune une demi-plaque ne comportant pas ladite première fenêtre, et délimitant entre elles un volume isolé dudit premier collecteur d'alimentation, et/ou deux plaques bipolaires adjacentes dans l'empilement comportent chacune une demi-plaque ne comportant pas ladite deuxième fenêtre, et délimitant entre elles un volume isolé dudit deuxième collecteur d'alimentation.

Les deux portions du premier collecteur d'alimentation peuvent avantageusement être connectées fluidiquement au même nombre de compartiments anodiques et/ou les deux portions du deuxième collecteur d'alimentation sont connectées fluidiquement au même nombre de compartiments cathodiques.

Dans un exemple particulier, la source en un premier réactif est une source d'hydrogène et le deuxième collecteur est connecté à une source d'air.

De préférence, les moyens de commande sont configurés pour, dans une phase alimenter alternativement chacune des portions du premier collecteur et/ou du deuxième collecteur et maintenir fermé le collecteur de sortie, et dans une autre phase alimenter les deux portions du premier collecteur et/ou du deuxième collecteur simultanément et ouvrir le collecteur de sortie.

Un autre objet de la présente demande est un procédé de fabrication d'une pile à combustible à n + m cellules élémentaires selon l'invention comportant :
- fabrication des n + m + 1 plaques bipolaires,
- fabrication d'une première fenêtre dans au plus n + m plaques bipolaires et/ou d'une deuxième fenêtre dans au plus n + m plaques bipolaires, de sorte qu'au moins une plaque bipolaire ne comporte pas de première fenêtre et/ou de deuxième fenêtre,
- fabrication des n + m cellules élémentaires,
- fabrication de fenêtres dans les n + m cellules élémentaires pour délimiter les premier et deuxième collecteurs d'alimentation,
- fabrication de fenêtres dans tout ou partie des plaques bipolaires et dans tout ou partie des les plaques élémentaires pour délimiter le au moins un collecteur d'évacuation,
- empilage des plaques bipolaires et des cellules élémentaires en alternant les plaques bipolaires et les cellules élémentaires et en interposant des joints entre une plaque bipolaire et une cellule élémentaire, de sorte à délimiter les compartiments cathodiques et anodiques, le premier collecteur, le deuxième collecteur et le au moins un collecteur d'évacuation,
- disposition de la au moins une plaque bipolaire ne comportant pas de première et/ou de deuxième fenêtre dans l'empilement, de sorte qu'à la fin de l'empilement le premier collecteur d'alimentation et/ou le deuxième collecteur d'alimentation soient séparés en deux portions raccordées fluidiquement pour l'une à m compartiment et pour l'autre à n compartiments.

De préférence, les plaques bipolaires sont fabriquées à partir de deux demi-plaques bipolaires, et lors de l'étape de fabrication de la première fenêtre et/ou de la deuxième fenêtre, aucune première fenêtre et/ou deuxième fenêtre n'est réalisée dans une au moins une demi-plaque d'une plaque bipolaire ou au moins deux demi-plaques de deux plaques bipolaires différentes.

Avantageusement, n est égal à m.

### BRÈVE DESCRIPTION DES DESSINS

La présente invention sera mieux comprise sur la base de la description qui va suivre et des dessins en annexe sur lesquels:
[Fig. 1] est un exemple de représentation schématique d'un exemple de pile à combustible selon l'invention.
[Fig. 2] est une représentation schématique d'un autre exemple de pile à combustible selon l'invention.
[Fig. 3] est une représentation schématique partielle d'un autre exemple de pile à combustible selon l'invention.

### EXPOSÉ DÉTAILLÉ DE MODES DE RÉALISATION PARTICULIERS

La présente invention sera décrite dans le cas d'une pile à combustible alimentée du côté de l'anode par de l'hydrogène et du côté de la cathode par de l'air, la mise en oeuvre des moyens d'alimentation alternés étant appliquée ici à l'hydrogène, c'est-à-dire à l'alimentation des anodes. L'invention est applicable également à l'alimentation de la cathode, c'est-dire pour l'alimentation en comburant. Mais il sera compris que l'invention s'applique aux piles à combustible utilisant d'autres produits réactifs, et l'alimentation alternée peut s'appliquer du côté de l'alimentation en comburant et/ou du côté de l'alimentation en combustible.

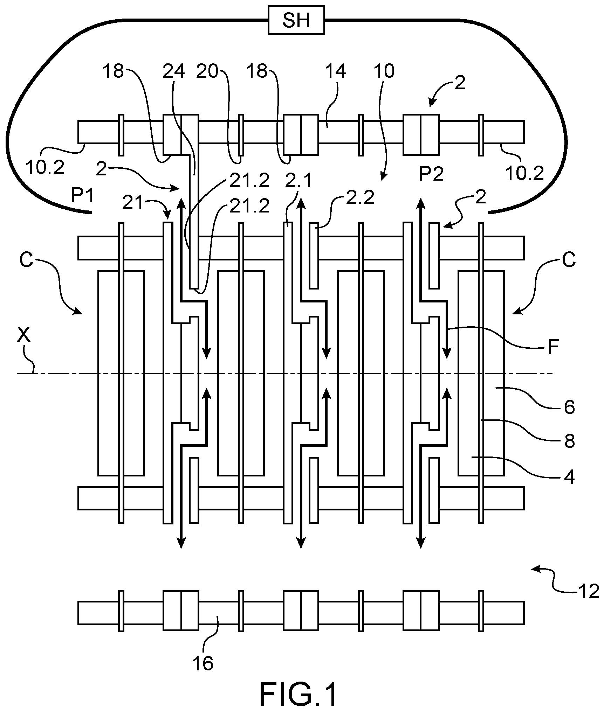

Sur la figure 1, on peut voir une représentation schématique d'un exemple de pile à combustible selon l'invention.

La pile à combustible comporte une pluralité de cellules élémentaires désignées C séparées deux à deux par des plaques bipolaires 2. Chaque cellule élémentaire C comporte une anode 4, une cathode 6 et un électrolyte 8 interposé ente l'anode 4 et la cathode 6 et assurant la conduction ionique entre l'anode et la cathode. L'électrolyte 8 est par exemple formé par une membrane.

Les cellules C et les plaques bipolaires 2 sont empilées et de préférence serrées l'une contre l'autre le long d'un axe X. Les plaques bipolaires 2 et les cellules C ont par exemple des formes circulaires, carrées ou rectangulaires. Par exemple, une pile à combustible comporte entre 2 et 1000 cellules élémentaires.

Chaque cellule élémentaire C délimite avec une plaque bipolaire adjacente du côté de l'anode, un compartiment anodique, et avec une autre plaque bipolaire adjacente du côté de la cathode un compartiment cathodique.

La pile comporte également des moyens d'alimentation et de distribution de l'hydrogène dans les compartiments anodiques. Les moyens d'alimentation et de distribution comportent un collecteur d'admission d'hydrogène 10.

La pile comporte également des moyens d'alimentation et de distribution de l'air dans les compartiments cathodiques. Les moyens d'alimentation et de distribution d'air comportent un collecteur d'admission d'air (non représenté).

La pile comporte également des moyens de collecte des gaz à évacuer comportant un collecteur d'évacuation ou de sortie 12 connecté aux compartiments anodiques, et un collecteur d'évacuation (non représenté) connecté aux compartiments cathodiques.

Le collecteur d'alimentation en hydrogène 10 est défini par des fenêtres 18 formées dans les plaques bipolaires 2 et des fenêtres 20 formées dans les cellules élémentaires C, plus particulièrement dans l'électrolyte 8. Les collecteurs d'alimentation en air et de sortie sont également formés par des fenêtres dans les cellules et les plaques bipolaires. Ces fenêtres sont par exemple réalisées par découpe laser, par poinçonnage ou par fraisage. Si les plaques bipolaires sont réalisées par un procédé de moulage, le moule utilisé est conçu de manière à éviter la présence de matériau dans cette zone.

La pile comporte des joints périphériques (non représentés) intercalés entre les cellules C et les plaques bipolaires 2 pour délimiter de manière étanche les compartiments anodiques et cathodiques. La pile comporte également des joints 14 intercalés entre les cellules C et les plaques bipolaires 2 et bordant les fenêtres 18, 20 pour délimiter le collecteur d'alimentation en hydrogène 10, des joints intercalés entre les cellules C et les plaques bipolaires 2 bordant les fenêtres pour délimiter le collecteur d'alimentation en air, et des joints 16 intercalés entre les cellules C et les plaques bipolaires 2 et bordant les fenêtres pour délimiter le collecteur d'évacuation. Le matériau des joints est par exemple choisi parmi les polymères, par exemple le silicone, le polymère d'éthylène-propylène-diène ou EPDM, les fluoroélastomères tels que ceux à base de carbone (FKM), des composites métal-polymères, par exemple comportant une tôle métallique emboutie revêtue d'un film de FKM.

Dans cet exemple et de manière non limitative les collecteurs s'étendent selon des axes parallèles à l'axe X.

La connexion fluidique entre le collecteur d'alimentation en hydrogène et chaque compartiment cathodique comporte un canal 21 réalisé dans la plaque bipolaire. Dans l'exemple représenté, chaque plaque bipolaire 2 comporte deux demi-plaques bipolaires 2.1, 2.2, l'une définissant un compartiment anodique et l'autre définissant un compartiment cathodique adjacent. Dans cet exemple, le canal 21 comporte une partie transversale 21.1 formée en partie dans la demi-plaque 2.1 et en partie dans la demi-plaque 2.2 et une partie axiale 21.2 formée dans la demi-plaque 2.2. En variante le canal 21 est réalisé entièrement dans la demi-plaque 2.2. De préférence, un circuit de refroidissement (non représenté) est prévu dans chaque plaque collectrice. Dans cet exemple le circuit est situé à l'intérieur de chaque plaque bipolaire, formé dans l'une ou l'autre des demi-plaques, ou dans les deux. En variante, les plaques bipolaires sont d'un seul tenant et le canal 21 est aménagé dans la plaque bipolaire par exemple par usinage, ajout d'insert lors d'un moulage éventuel ou impression 3D.

Sur la figure 1, la pile comporte au moins une paroi 24 séparant de manière étanche en deux portions P1, P2 le collecteur d'alimentation en hydrogène. La paroi 24 est formée par une demi-plaque bipolaire qui n'a pas été découpée pour former le collecter d'alimentation en hydrogène, et donc qui ne comporte pas de fenêtre 18.

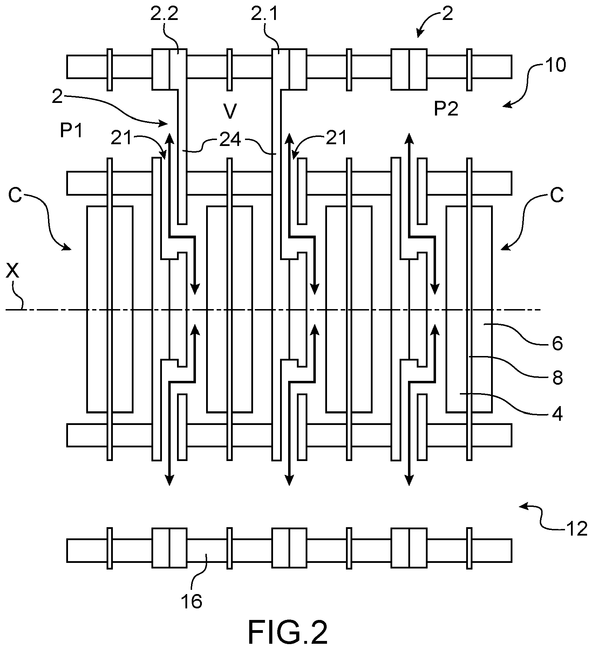

Sur la figure 2, une demi-plaque 2.1 d'une plaque bipolaire et une demi-plaque 2.2 d'une plaque bipolaire adjacente ne comportent pas de fenêtre 18. Les demi-plaques sont néanmoins structurées pour connecter les compartiments anodiques qu'elles délimitent avec le collecteur d'alimentation en hydrogène. Deux parois 24 sont ainsi formées. Un volume clos V est délimité entre les deux demi-plaques non découpées mais cette zone ne sert pas à alimenter de compartiment anodique, et le compartiment cathodique est alimenté par le collecteur d'alimentation en air.

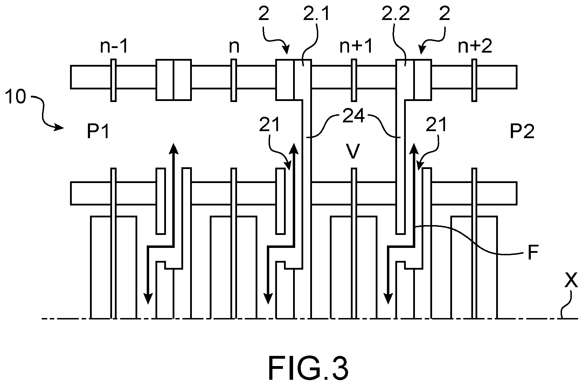

Sur la figure 3, on peut voir une variante de la pile de la figure 2, dans laquelle les demi-plaques 2.1, 2.2 ne comportant pas de fenêtre 18 ont des emplacements différents et des orientations différentes pour assurer une délimitation de deux portions de collecteur connectée chacune au même nombre de compartiments cathodiques.

En variante, les plaques bipolaires sont monoblocs et une ou deux d'entre elles ne comportent pas de fenêtre 18, mais sont structurées pour connecter les compartiments anodiques qu'elles délimitent avec le collecteur d'alimentation en hydrogène.

La mise en oeuvre d'une seule paroi 24 comme dans la pile de la figure 1, permet avantageusement d'éviter de délimiter un volume de gaz clos qui peut être à une pression différente de celle dans les deux portions de collecteur.

De préférence, la position de la ou des parois est choisie de sorte que chaque portion assure l'alimentation en hydrogène du même nombre de compartiments anodiques. Dans les exemples représentés, chaque portion P1, P2 alimente deux compartiments anodiques.

En outre le collecteur d'alimentation 10 en hydrogène est configuré pour être connecté au niveau de ses deux extrémités 10.1, 10.2 à une source d'hydrogène SH (figure 1), des moyens (non représentés) sont prévus pour commander séparément la connexion de chacune des extrémités 10.1, 10.2 à la source d'hydrogène SH.

Les flèches F symbolisent la circulation de l'hydrogène.

L'invention permet de limiter sensiblement les modifications à apporter aux éléments de l'empilement de la pile à combustible. En effet, seule une ou des plaques bipolaires subissent une étape de fabrication en moins. Les dimensions, en particulier les épaisseurs des plaques ne sont pas modifiées, ce qui permet de conserver les mêmes joints entre les éléments de l'empilement.

Le collecteur d'alimentation en air peut également être configuré pour permettre une alimentation dissociée de deux groupes de compartiments cathodiques. De préférence la ou les plaques ou demi-plaques bipolaires non découpés assurant la division du collecteur d'alimentation en hydrogène est ou sont utilisées pour diviser le collecteur d'alimentation en air en deux portions. Celle(s)-ci ne comporte(nt) donc pas de fenêtre pour délimiter le collecteur d'alimentation en air. La fabrication est simplifiée puisque c'est ou ce sont la ou les mêmes plaques qui ne subisse(nt) pas l'étape de découpe des fenêtres.

De préférence, toutes les plaques bipolaires comportent au moins une fenêtre pour délimiter le ou les collecteurs d'évacuation.

Le fonctionnement de la pile à combustible de la figure 1 va maintenant être décrit.

Dans une phase de fonctionnement, seule la portion P1 est connectée à la source d'hydrogène SH, par exemple en commandant des vannes pour qu'elles permettent l'écoulement de l'hydrogène vers la portion P1 et empêche la circulation dans la portion P2, les cellules du groupe A sont donc directement alimentées en hydrogène. L'hydrogène parvient aux cellules du groupe B par l'intermédiaire du collecteur de sortie 12, qui est commun aux deux groupes A et B. L'eau liquide parvenant aux anodes des cellules du groupe A est évacuée dans le collecteur de sortie sous l'effet du flux d'hydrogène allant vers le groupe B, qui lui emmène de la vapeur d'eau. L'azote, parvenant aux anodes depuis la cathode dans les cellules des groupes A et B, s'accumule dans les cellules du groupe B. L'eau liquide provenant de la cathode et parvenant aux anodes des cellules du groupe B s'accumule également, de même qu'une partie de la vapeur d'eau venant du groupe A qui se condense. Le collecteur de sortie est obturé par exemple par une vanne qui est fermée.

Dans une phase de fonctionnement suivante, l'alimentation de la portion P1 est interrompue, et c'est au tour de la portion P2 d'être connectée directement à la source d'hydrogène SH, Les cellules du groupe B sont alors directement alimentées. Les cellules du groupe A sont alimentées en hydrogène via les cellules du groupe B et du collecteur d'évacuation. L'azote et l'eau s'accumulent dans les cellules du groupe A. La vanne du collecteur de sortie reste fermée.

Les deux phases sont appliquées en alternance, par exemple en commutant alternativement les électrovannes. Après un certain temps de fonctionnement, l'azote accumulé dans le circuit doit être évacué.

Lors d'une phase suivante, les deux vannes sont ouvertes pour alimenter simultanément directement en hydrogène les cellules des deux groupes A et B. Le mélange gazeux est évacué par le collecteur de sortie 12 suite à l'ouverture de la vanne du collecteur de sortie.

Lors des trois phases de fonctionnement, toutes les cellules sont alimentées en air.

La description des moyens pour diviser les compartiments anodiques en deux groupes et pouvoir les alimenter séparément peut s'appliquer aux compartiments cathodiques si de tels moyens sont mis en oeuvre.

Un exemple de procédé de fabrication de la pile de la figure 2 va maintenant être décrit. On considère que le collecteur d'alimentation en air n'est pas divisé.

A partir de plaques pleines, des demi-plaques bipolaires 2.1 et 2.2 sont fabriquées en réalisant des fenêtres, par exemple par découpage laser ou par fraisage, pour réaliser les collecteurs d'alimentation et d'évacuation et en réalisant des portions de canaux, par exemple et de manière non limitative par emboutissage, moulage ou usinage, pour alimenter les compartiments anodique et cathodique. Dans une demi-plaque bipolaire 2.1 et une demi-plaque bipolaire 2.2, la fenêtre 18 n'est pas découpée. Les fenêtres pour le collecteur d'alimentation en air et le ou les collecteurs d'évacuation sont découpées dans toutes les demi-plaques.

Les cellules élémentaires sont également structurées en réalisant des fenêtres pour les différents collecteurs.

Les plaques bipolaires et les cellules élémentaires sont superposées en alignant les fenêtres, et en interposant entre une cellule élémentaire et une plaque bipolaire les joints requis pour délimiter les compartiments anodiques et cathodiques et les collecteurs. La plaque bipolaire 2.1 et la plaque bipolaire 2.2 ne comportant pas de fenêtre 18 sont placés dans l'empilement, de sorte qu'à la fin de l'empilement le collecteur d'alimentation en hydrogène soit séparé en deux portions raccordées de préférence fluidiquement chacune au même nombre de compartiments anodiques.

Un effort de serrage est ensuite de préférence appliqué dans la direction axiale de l'empilement, par exemple au moyen de tirants.

Les deux extrémités du collecteur d'alimentation en hydrogène sont connectées à une source d'hydrogène, des vannes commandées sont prévues entre la source d'hydrogène et les deux extrémités.

Le collecteur d'alimentation en air est connecté à une source d'air.

Le collecteur d'évacuation est connecté à une zone d'évacuation via une vanne commandée.

## Revendications

1. Pile à combustible comportant un empilement de cellules élémentaires (C) séparées par des plaques bipolaires (2), chaque cellule élémentaire (C) comportant une anode (4) , une cathode (6) et un électrolyte (8) entre l'anode (4) et la cathode (6), et définissant avec une plaque bipolaire (2) du côté de l'anode (4) un compartiment anodique et du côté de la cathode (6) un compartiment cathodique, un premier collecteur d'alimentation (10) des compartiments anodiques en un premier réactif, un deuxième collecteur d'alimentation des compartiments cathodiques en un deuxième réactif, et au moins un collecteur d'évacuation (12) des sous-produits de réaction, dans laquelle ledit premier collecteur d'alimentation (10) comporte deux extrémités (10.1, 10.2) configurées pour être connectées à une source du premier réactif et/ou le deuxième collecteur d'alimentation comporte deux extrémités configurées pour être connectées à une source du deuxième réactif, dans laquelle ladite pile comporte des moyens de commande configurées pour commander séparément l'alimentation des première et deuxième extrémités du premier et/ou deuxième collecteur d'alimentation, dans laquelle ledit premier collecteur d'alimentation (10) est divisé en deux portions (P1, P2) par au moins une première paroi (24) étanche au premier réactif, chaque portion (P1, P2) étant reliée fluidiquement à des compartiments anodiques par des connexions fluidiques, dans laquelle chaque portion (P1, P2) est délimitée par des premières fenêtres (18) formées dans des plaques bipolaires (2) et des fenêtres (20) dans les cellules élémentaires (C), et dans laquelle la première paroi (24) est formée par au moins une plaque bipolaire ne comportant pas ladite première fenêtre (18), et/ou dans laquelle ledit deuxième collecteur d'alimentation est divisé en deux portions par au moins une deuxième paroi étanche au deuxième réactif, chaque portion étant reliée fluidiquement à des compartiments cathodiques par des connexions fluidiques, dans laquelle chaque portion est délimitée par des deuxièmes fenêtres formées dans des plaques bipolaires et des fenêtres formées dans les cellules élémentaires, et dans laquelle la deuxième paroi est formée par au moins une plaque bipolaire ne comportant pas ladite deuxième fenêtre.

2. Pile à combustible selon la revendication 1, dans laquelle les plaques bipolaires (2) comportent deux demi-plaques (2.1, 2.2) superposées et dans laquelle les connexion entre les collecteurs et les compartiments anodiques et cathodiques sont réalisées au moins en partie entre lesdites plaques (2.1, 2.2).

3. Pile à combustible selon la revendication 2, dans laquelle la première paroi de séparation est formée par au moins une des demi-plaques (2.2, 2.2) d'une plaque bipolaire ne comportant pas ladite première fenêtre, et/ou la deuxième paroi de séparation est formée par au moins une des demi-plaques (2.2, 2.2) d'une plaque bipolaire ne comportant pas ladite deuxième fenêtre.

4. Pile à combustible selon la revendication précédente, dans laquelle deux plaques bipolaires adjacentes dans l'empilement comportent chacune une demi-plaque ne comportant pas ladite première fenêtre, et délimitant entre elles un volume isolé dudit premier collecteur d'alimentation, et/ou deux plaques bipolaires adjacentes dans l'empilement comportent chacune une demi-plaque ne comportant pas ladite deuxième fenêtre, et délimitant entre elles un volume isolé dudit deuxième collecteur d'alimentation.

5. Pile à combustible selon l'une des revendications 1 à 4, dans laquelle les deux portions du premier collecteur d'alimentation sont connectées fluidiquement au même nombre de compartiments anodiques et/ou les deux portions du deuxième collecteur d'alimentation sont connectées fluidiquement au même nombre de compartiments cathodiques.

6. Pile à combustible selon l'une des revendications 1 à 5, dans laquelle la source en un premier réactif est une source d'hydrogène (SH) et le deuxième collecteur est connecté à une source d'air.

7. Pile à combustible selon l'une des revendications précédentes, dans laquelle lesdits moyens de commande sont configurés pour, dans une phase alimenter alternativement chacune des portions du premier collecteur et/ou du deuxième collecteur et maintenir fermé le collecteur de sortie, et dans une autre phase alimenter les deux portions du premier collecteur et/ou du deuxième collecteur simultanément et ouvrir le collecteur de sortie.

8. Procédé de fabrication d'une pile à combustible à n + m cellules élémentaires selon l'une des revendications 1 à 7, comportant :
- fabrication des n + m + 1 plaques bipolaires (2),
- fabrication d'une première fenêtre dans au plus n + m plaques bipolaires et/ou d'une deuxième fenêtre dans au plus n + m plaques bipolaires, de sorte qu'au moins une plaque bipolaire ne comporte pas de première fenêtre et/ou de deuxième fenêtre,
- fabrication des n + m cellules élémentaires (C),
- fabrication de fenêtres dans les n + m cellules élémentaires pour délimiter les premier et deuxième collecteurs d'alimentation,
- fabrication de fenêtres dans tout ou partie des plaques bipolaires et dans tout ou partie des les plaques élémentaires pour délimiter le au moins un collecteur d'évacuation,
- empilage des plaques bipolaires (2) et des cellules élémentaires(C) en alternant les plaques bipolaires (2) et les cellules élémentaires(C) et en interposant des joints entre une plaque bipolaire (2) et une cellule élémentaire (4), de sorte à délimiter les compartiments cathodiques et anodiques, le premier collecteur, le deuxième collecteur et le au moins un collecteur d'évacuation,
- disposition de la au moins une plaque bipolaire ne comportant pas de première et/ou de deuxième fenêtre dans l'empilement, de sorte qu'à la fin de l'empilement le premier collecteur d'alimentation (10) et/ou le deuxième collecteur d'alimentation soient séparés en deux portions (P1, P2) raccordées fluidiquement pour l'une à m compartiment et pour l'autre à n compartiments.

9. Procédé de fabrication selon la revendication 8, dans lequel les plaques bipolaires sont fabriquées à partir de deux demi-plaques bipolaires, et lors de l'étape de fabrication de la première fenêtre et/ou de la deuxième fenêtre, aucune première fenêtre et/ou deuxième fenêtre n'est réalisée dans une au moins une demi-plaque d'une plaque bipolaire ou au moins deux demi-plaques de deux plaques bipolaires différentes.

10. Procédé de fabrication selon la revendication 8 ou 9, dans lequel n est égal à m.

## Patentansprüche

1. Brennstoffzelle, einen Stapel von Elementarzellen (C) beinhaltend, die durch bipolare Platten (2) getrennt sind, wobei jede Elementarzelle (C) eine Anode (4), eine Kathode (6) und einen Elektrolyten (8) zwischen der Anode (4) und der Kathode (6) beinhaltet, und mit einer bipolaren Platte (2) auf der Seite der Anode (4) einen Anodenraum definierend und auf der Seite der Kathode (6) einen Kathodenraum, einen ersten Versorgungskollektor (10) der Anodenräume in einem ersten Reaktanten, einen zweiten Versorgungskollektor der Kathodenräume in einem zweiten Reaktanten, und mindestens einen Evakuierungskollektor (12) der Nebenprodukte der Reaktion, wobei der erste Versorgungskollektor (10) zwei Enden (10.1, 10.2) beinhaltet, die konfiguriert sind, um mit einer Quelle des ersten Reaktanten verbunden zu werden, und/oder der zweite Versorgungskollektor zwei Enden beinhaltet, die konfiguriert sind, um mit einer Quelle des zweiten Reaktanten verbunden zu werden, wobei die Zelle Steuermittel beinhaltet, die konfiguriert sind, um die Versorgung des ersten und zweiten Endes des ersten und/oder zweiten Versorgungskollektors getrennt zu steuern, wobei der erste Versorgungskollektor (10) durch mindestens eine erste zum ersten Reaktanten abgedichtete Wand (24) in zwei Abschnitte (P1, P2) unterteilt ist, wobei jeder Abschnitt (P1, P2) durch Fluidverbindungen fluidisch an die Anodenräume angebunden ist, wobei jeder Abschnitt (P1, P2) durch erste Fenster (18) abgegrenzt ist, die in bipolaren Platten (2) gebildet sind und in Fenstern (20) in den Elementarzellen (C), und wobei die erste Wand (24) durch mindestens eine bipolare Platte gebildet ist, die das erste Fenster (18) nicht beinhaltet, und/oder wobei der zweite Versorgungskollektor durch mindestens eine zum zweiten Reaktanten abgedichtete Wand in zwei Abschnitte unterteilt ist, wobei jeder Abschnitt durch Fluidverbindungen fluidisch an die Kathodenräume angebunden ist, wobei jeder Abschnitt durch zweite Fenster abgegrenzt ist, die in bipolaren Platten gebildet sind und in Fenstern, die in Elementarzellen gebildet sind, und wobei die zweite Wand durch mindestens eine bipolare Platte gebildet ist, die das zweite Fenster nicht beinhaltet.

2. Brennstoffzelle nach Anspruch 1, wobei die bipolaren Platten (2) zwei übereinanderliegende Halbplatten (2.1, 2.2) beinhalten und wobei die Verbindungen zwischen den Kollektoren und den Anoden- und Kathodenräumen mindestens teilweise zwischen den Platten (2.1, 2.2) erstellt sind.

3. Brennstoffzelle nach Anspruch 2, wobei die erste Trennwand durch mindestens eine der Halbplatten (2.2, 2.2) einer bipolaren Platte gebildet ist, die das erste Fenster nicht beinhaltet, und/oder die zweite Trennwand durch mindestens eine der Halbplatten (2.2, 2.2) einer bipolaren Platte gebildet ist, die das zweite Fenster nicht beinhaltet.

4. Brennstoffzelle nach dem vorhergehenden Anspruch, wobei zwei benachbarte bipolare Platten im Stapel jeweils eine Halbplatte beinhalten, die das erste Fenster nicht beinhaltet, und zwischen ihnen ein isoliertes Volumen des ersten Versorgungskollektors abgrenzt, und/oder zwei benachbarte bipolare Platten im Stapel jeweils eine Halbplatte beinhalten, die das zweite Fenster nicht beinhaltet, und zwischen ihnen ein isoliertes Volumen des zweiten Versorgungskollektors abgrenzt.

5. Brennstoffzelle nach einem der Ansprüche 1 bis 4, wobei die zwei Abschnitte des ersten Versorgungskollektors fluidisch mit der gleichen Anzahl von Anodenräumen verbunden sind und/oder die zwei Abschnitte des zweiten Versorgungskollektors fluidisch mit der gleichen Anzahl von Kathodenräumen verbunden sind.

6. Brennstoffzelle nach einem der Ansprüche 1 bis 5, wobei die Quelle in einem ersten Reaktanten eine Wasserstoffquelle (SH) ist und der zweite Kollektor mit einer Luftquelle verbunden ist.

7. Brennstoffzelle nach einem der vorhergehenden Ansprüche, wobei die Steuermittel konfiguriert sind, um in einer Phase abwechselnd jeden der Abschnitte des ersten Kollektors und/oder des zweiten Kollektors zu versorgen und den Ausgangskollektor geschlossen zu halten, und in einer anderen Phase die zwei Abschnitte des ersten Kollektors und/oder des zweiten Kollektors gleichzeitig zu versorgen und den Ausgangskollektor zu öffnen.

8. Verfahren zur Herstellung einer Brennstoffzelle mit n + m Elementarzellen nach einem der Ansprüche 1 bis 7, beinhaltend:
- Herstellung der n + m + 1 bipolaren Platten (2),
- Herstellung eines ersten Fensters in höchstens n + m bipolaren Platten und/oder eines zweiten Fensters in höchstens n + m bipolaren Platten, so dass mindestens eine bipolare Platte kein erstes Fenster und/oder zweites Fenster beinhaltet,
- Herstellung von n + m Elementarzellen (C),
- Herstellung von Fenstern in den n + m Elementarzellen zur Abgrenzung des ersten und zweiten Versorgungskollektors,
- Herstellung von Fenstern in allen oder einem Teil der bipolaren Platten und in allen oder einem Teil der Elementarplatten zur Abgrenzung des mindestens einen Evakuierungskollektors,
- Stapeln der bipolaren Platten (2) und der Elementarzellen (C) durch Abwechseln der bipolaren Platten (2) und der Elementarzellen (C) und durch Zwischenlegen von Dichtungen zwischen einer bipolaren Platte (2) und einer Elementarzelle (4), so dass die Kathoden- und Anodenräume, der erste Kollektor, der zweite Kollektor und der mindestens eine Evakuierungskollektor abgegrenzt sind,
- Anordnung der mindestens einen bipolaren Platte, die kein erstes und/oder zweites Fenster im Stapel beinhaltet, so dass am Ende des Stapelns der erste Versorgungskollektor (10) und/oder der zweite Versorgungskollektor in zwei Abschnitte (P1, P2) getrennt sind, die mit einem mit m Räumen und mit dem anderen mit n Räumen fluidisch verknüpft sind.

9. Herstellungsverfahren nach Anspruch 8, wobei die bipolaren Platten aus zwei bipolaren Halbplatten hergestellt sind, und im Herstellungsschritt des ersten Fensters und/oder des zweiten Fensters kein erstes Fenster und/oder zweites Fenster in mindestens einer Halbplatte einer bipolaren Platte erstellt wird oder mindestens zwei Halbplatten der zwei verschiedenen bipolarer Platten.

10. Herstellungsverfahren nach Anspruch 8 oder 9, wobei n gleich m ist.

## Claims

1. A fuel cell including a stack of elementary cells (C) separated by bipolar plates (2), each elementary cell (C) including an anode (4), a cathode (6) and an electrolyte (8) between the anode (4) and the cathode (6), and defining with a bipolar plate (2) on the side of the anode (4) an anode compartment and on the side of the cathode (6) a cathode compartment, a first manifold (10) for supplying the anode compartments with a first reagent, a second manifold for supplying the cathode compartments with a second reagent, and at least one manifold (12) for evacuating the reaction by-products, wherein said first supply manifold (10) includes two ends (10.1, 10.2) configured to be connected to a source of the first reagent and/or the second supply manifold includes two ends configured to be connected to a source of the second reagent, wherein said cell includes control means configured to separately control the supply of the first and second ends of the first and/or second supply manifold, wherein said first supply manifold (10) is divided into two portions (P1, P2) by at least a first wall (24) impervious to the first reagent, each portion (P1, P2) being fluidically connected to anode compartments by fluidic connections, wherein each portion (P1, P2) is delimited by first windows (18) formed in bipolar plates (2) and windows (20) in the elementary cells (C), and wherein the first wall (24) is formed by at least one bipolar plate not including said first window (18), and/or wherein said second supply manifold is divided into two portions by at least one second wall impervious to the second reagent, each portion being fluidically connected to cathode compartments by fluidic connections, wherein each portion is delimited by second windows formed in bipolar plates and windows formed in the elementary cells, and wherein the second wall is formed by at least one bipolar plate not including said second window.

2. The fuel cell according to claim 1, wherein the bipolar plates (2) include two superposed half-plates (2.1, 2.2) and wherein the connections between the manifolds and the anode and cathode compartments are made at least in part between said plates (2.1, 2.2).

3. The fuel cell according to claim 2, wherein the first separation wall is formed by at least one of the half-plates (2.2, 2.2) of a bipolar plate not including said first window, and/or the second separation wall is formed by at least one of the half-plates (2.2, 2.2) of a bipolar plate not including said second window.

4. The fuel cell according to the preceding claim, wherein two adjacent bipolar plates in the stack each include a half-plate not including said first window, and delimiting therebetween a volume isolated from said first supply manifold, and/or two adjacent bipolar plates in the stack each include a half-plate not including said second window, and delimiting therebetween a volume isolated from said second supply manifold.

5. The fuel cell according to one of claims 1 to 4, wherein the two portions of the first supply manifold are fluidically connected to the same number of anode compartments and/or the two portions of the second supply manifold are fluidically connected to the same number of cathode compartments.

6. The fuel cell according to one of claims 1 to 5, wherein the source of a first reagent is a source of hydrogen (SH) and the second manifold is connected to an air source.

7. The fuel cell according to one of the preceding claims, wherein said control means are configured, in one phase, to alternately supply each of the portions of the first manifold and/or of the second manifold and keep the outlet manifold closed, and in another phase, to supply the two portions of the first manifold and/or of the second manifold simultaneously and open the output manifold.

8. A method for manufacturing a fuel cell with n + m elementary cells according to one of claims 1 to 7, including:
- manufacturing n + m + 1 bipolar plates (2),
- manufacturing a first window in at most n + m bipolar plates and/or a second window in at most n + m bipolar plates, such that at least one bipolar plate does not include a first window and/or a second window,
- manufacturing the n + m elementary cells (C),
- manufacturing windows in the n + m elementary cells to delimit the first and second supply manifolds,
- manufacturing windows in all or part of the bipolar plates and in all or part of the elementary plates to delimit the at least one evacuation manifold,
- stacking the bipolar plates (2) and the elementary cells (C) by alternating the bipolar plates (2) and the elementary cells (C) and by interposing seals between a bipolar plate (2) and an elementary cell (4), so as to delimit the cathode and anode compartments, the first manifold, the second manifold and the at least one evacuation manifold,
- disposing the at least one bipolar plate including no first and/or second window in the stack, so that at the end of the stacking the first supply manifold (10) and/or the second supply manifold are separated into two portions (P1, P2) fluidly connected for one to m compartment and for the other to n compartments.

9. The manufacturing method according to claim 8, wherein the bipolar plates are manufactured from two bipolar half-plates, and during the step of manufacturing the first window and/or the second window, no first window and/or second window is made in at least one half-plate of a bipolar plate or at least two half-plates of two different bipolar plates.

10. The manufacturing method according to claim 8 or 9, wherein n is equal to m.
